# EUROPEAN PATENT SPECIFICATION

(11) **EP 0 879 987 B1**
(45) Date of publication and mention of the grant of the patent: **27.03.2002**
(21) Application number: 98303694.8
(22) Date of filing: 12.05.1998
(51) Int. Cl.: F16L 55/16, F16L 55/26

(54) **Method and apparatus for sealing branch connections of a lined conduit**
Verfahren und Vorrichtung zur Abdichtung von Verzweigsverbindungen einer innenausgekleideten Leitung
Méthode et appareil pour assurer l'étanchéité des connexions de branchements d'une canalisation avec revêtement intérieur

(30) Priority: 12.05.1997 GB 9709626; 24.09.1997 GB 9720471
(43) Date of publication of application: 25.11.1998
(73) Proprietor: Evolved Processes Limited, Marlborough, Wiltshire SN8 1HQ (GB)
(72) Inventor: Poole, Anthony George, Fordingbridge, Hampshire SP6 2PT (GB)
(74) Representative: Foster, Mark Charles

(56) References cited:
- WO-A-91/17325
- WO-A-92/17728
- WO-A-94/10495
- WO-A-96/12134
- DE-A- 4 031 949
- GB-A- 2 243 658

## Description

When a conduit for liquids and gases receives a lining, the lining is usually in the form of a continuous tubular lining, so that any branch passages leading from the wall of the conduit are obscured and covered by the lining. In order that liquid or gas in the lined conduit can reach a branch passage, it is necessary to pierce the lining, which leads to problems of sealing the edges of the lining at the pierced portion to the main conduit. If this sealing is not done, liquid or gas may penetrate between the lining and the main wall of the conduit and the periphery of the piercing may become stretched, frayed or otherwise damaged.

GB-A-2243658 discloses a method of connecting a polymeric service pipe (branch pipe) to a main pipe. A polyethylene sleeve and plug are employed to facilitate the connection.

DE-A-4031949 discloses a method of renovation of a main sewer and a branch pipe involving fitting liners made of flexible plastics tube. A sealing ring is fitted at the end of the branch pipe to seal the joint between it and the main pipe liner. The sealing ring is put in position with the aid of a carriage which carries a drilling tool which cuts a hole in the wall of the main pipe liner.

The present invention provides a method of sealing the junction with a branch passage of a conduit provided with a resilient lining comprising forming an aperture in the lining of the conduit at the position of the branch passage, forming an aperture in the conduit, larger than the aperture in the lining, at the position of the branch passage, inserting a flanged conduit flange-first through said apertures, the flange being smaller than the aperture in the conduit but larger than the aperture in the lining, the natural resilience of the lining allowing the flange to pass through the aperture therein, lining the aperture in the main conduit to reduce its size below that of the flange of the flanged conduit and drawing the branch conduit outwards from the main conduit through its lined aperture so as to engage the rim of the aperture in the lining to seal it against the lining of the aperture in the main conduit.

The lining of the aperture in the main conduit may be achieved by providing a lining member on the flanged conduit when the latter is inserted through the apertures. To achieve this, the aperture in the conduit may be threaded and the lining member then has a cooperating thread. The lining member can also be screw-threadedly mounted on the flanged conduit. The flanged conduit is then inserted by screwing it with the lining member together into the main conduit so that insertion and withdrawal of the flanged conduit and lining member relative to the main conduit can be effected by rotating them. The flanged conduit is then drawn outwards from the main conduit by rotating the former relative to the lining member, thereby trapping the rim of the aperture in the lining between the flange of the flanged conduit and the lining member. The flanged conduit may be provided with a knife cutter at the end beyond the flange so as to cut through the lining of the main conduit as the flanged conduit is inserted through the apertures, however this is achieved. Apparatus may be provided to detect the presence of a side passage from the interior of the lining, to form an aperture in the lining at said position and to insert a sealing member through the aperture to engage the branch passage. The engagement of the sealing member with the branch passage is preferably by friction and the sealing of the sealing member to the lining is by means of a flange on the interior side of the lining, and the underside of the flange may be provided with adhesive, for bonding the flange to the lining.
Alternatively a flexible seal or weld may be used.

Conduits which are too small for a human operator to enter and insert the sealing member through the aperture leading to the side passage may have to use a machine to do this work. A carriage may travel down the lined conduit, the machine having a sensing device to sense the mouth of a side passage through the lining. This might be done by sensing the change in magnetic/electric fields occasioned by the mouth in the wall of the conduit or by sensing the change in reaction of the lining depending on the presence or absence of the conduit wall behind it. The machine is provided with means for cutting an aperture in the lining up to the diameter of the side passage although preferably slightly smaller than the diameter of the side passage.
The machine is provided with means for inserting a flanged hollow plug into the side passage, the stem of the plug forcing the periphery of the aperture in the lining into the mouth of the side passage against the walls thereof and the underside of the flange of the plug pressing against the lining around the periphery of the side passage. The flange of the plug may be bonded to the lining around the mouth of the side passage, for example by using adhesive or by the application of heat. A compression seal may also be located between the flange and the liner. Finally the hollow plug may be bonded to the inside of the side passage.

A plug thus inserted into the side passage forms by means of its stem a seal with the walls of the side passage and by means of its flange a seal around the periphery of the lining, so that liquid in the lined main conduit can pass into and out of the side passage without escaping into the region between the lining and the main wall of the main passage. This is important when the lined conduit is to be used to convey fluids at pressures above ambient pressure.

Examples of the invention will now be described with reference to the accompanying drawings in which
Figures 1 to 3 show stages in forming an aperture in a lined conduit,
Figures 4 to 6 show stages in the fixing of a branch passage leading from the main conduit through the apertures shown in Figures 1 to 3,
Figure 7 shows a pig within the lining of a main conduit sensing the presence of an aperture in the wall of the main conduit behind the continuous lining,
Figure 8 shows a flange plug inserted through the lining and through the sensed aperture, and
Figure 9 shows a modification of Figure 5 with a knife cutter on the underside of the flange of the flanged conduit.

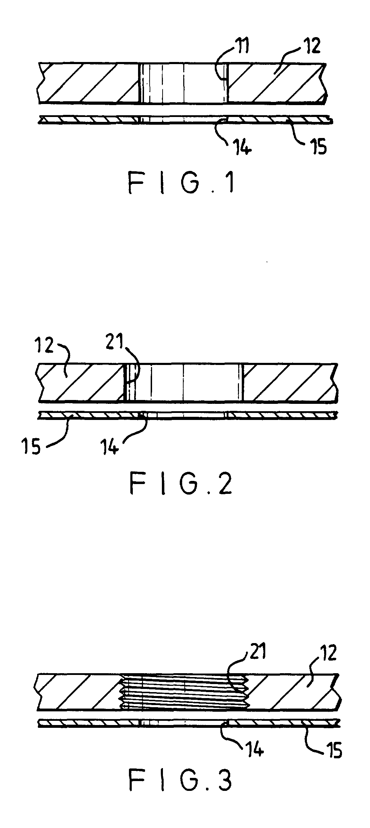

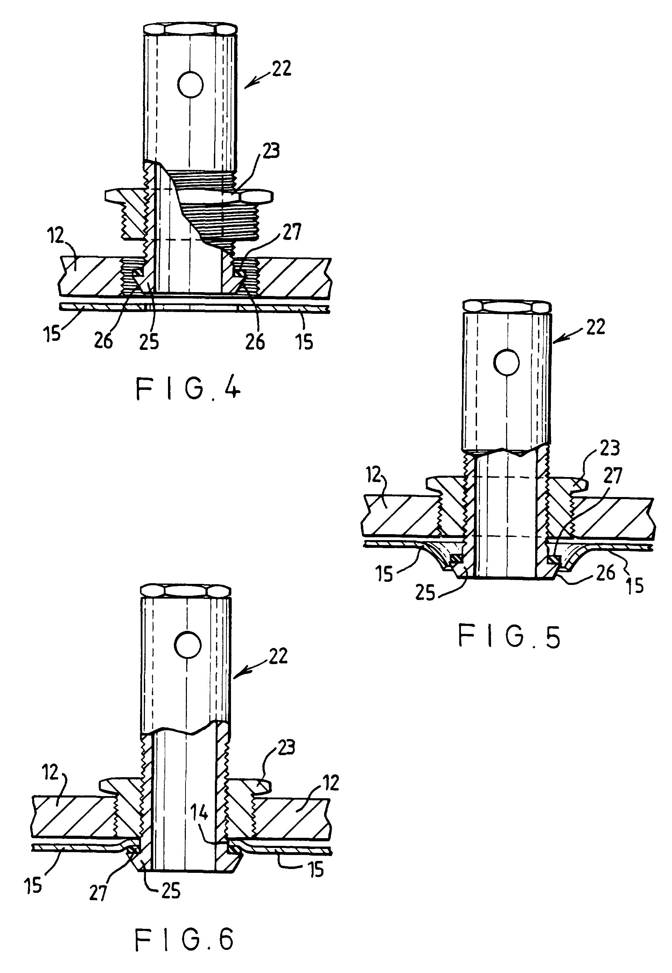

In Figure 1, a circular aperture 11 of a first diameter is drilled through a wall 12 of a main conduit and subsequently 14 through the lining 15 on the internal side of the wall of the main conduit. The apertures 11, 14 are aligned and of the same diameter. Subsequently, as shown in Figure 2, a concentric aperture 21 is drilled in the wall of the main conduit only of a slightly larger diameter. As shown in Figure 3, the aperture 21 in the main conduit is threaded. As shown in Figure 4, a flanged branch conduit 22 fitted with a collar 23 is inserted through the apertures 21, 14 of Figures 1 to 3. The collar 23 acts as a liner or partial filler of the aperture 21 in the wall of the main conduit. The collar 23 has an external screw thread 24 which cooperates with the screw thread in the aperture 21 in the main conduit. The collar 23 has an internal thread by which it is mounted on the branch conduit 22. The flange 25 on the branch conduit is of generally uniform width around its respective conduit, integral with its respective conduit and has a tapered rim 26, extending from a minimum diameter at the end of the conduit to a maximum diameter remote from the end of the conduit and a sealing O-ring 27 is lodged under the rim of the flange at its maximum diameter.

When as illustrated the flange is annular, its width is exactly uniform. Its periphery could however be polygonal in which case its width would vary slightly while still being generally uniform. The branch conduit 22 with its collar 23 is inserted in the aperture 21 (Fig. 4) and the collar 23 is screwed down into the main conduit wall (Fig. 5). The flange 25 of the branch conduit, which passes easily through the aperture 21 in the main conduit wall, is forced through the smaller aperture 14 in the lining as the conduit moves down, the lining being of resilient material which allows the flange to pass through. The passage is assisted by the chamfer 26 on the flange 25. The natural resilience of the lining will cause the lining to snap back after passage of the flange 25 therethrough so that it rests around the stem of the branch conduit beyond the flange. The branch conduit is then screwed out again thus sealing the rim of the aperture in the lining between the sealing ring 27 on the flange of the branch conduit and the underside of the collar 23. This is the arrangement shown in Figure 6. This sealing arrangement prevents any gas or liquids in the lined conduit from escaping around the edges of the branch conduit or into the annulus between the lining and the wall of the main conduit.

This arrangement has the advantage over prior art liner sealing arrangements where an aperture is made in the lining of the same size as that in the main conduit and a sealing device is passed through the full size aperture in the lining and then subsequently expanded to provide a seal.

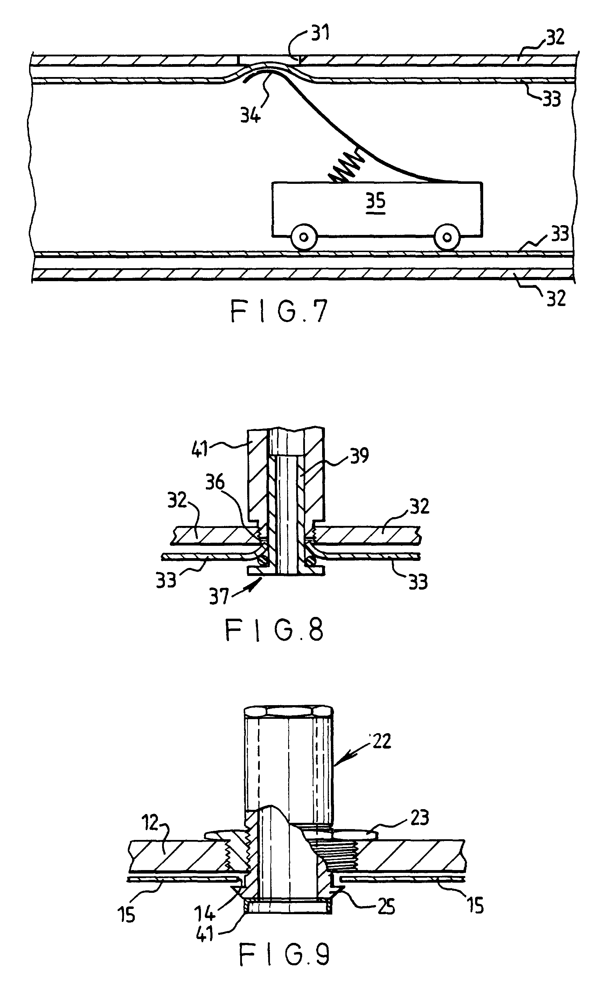

When it is desired to insert the seal for the branch conduit from the inside of the pipe, an aperture 31 is made in the main conduit wall 32 only as shown in Figures 7 and 8, without piercing the lining 33 and the presence of that aperture is detected from inside the pipe. In this example the aperture is detected by means of a detector 34 carried by a pig 35 within the conduit which senses the absence of support behind the lining at the position of the aperture. The pig 35 then makes an aperture 36 in the liner and inserts a flanged plug 37 through the liner aperture 36 into the aperture 31 in the main conduit wall, the flange 38 pressing the liner into contact with the rim of the aperture in the conduit wall to seal the plug to the liner and the stem 39 of the plug seals against the walls of a branch conduit 41 fitted to the aperture 31 in the main conduit. The plug 37 is preferably rigid and its stem 39 is preferably a force-fit in the conduit 41 to seal the plug to the conduit 41.

It is noted the sealing of the plug to the branch conduit is independent of the liner 33, which only contributes to the seal of the plug to the bore of the main conduit.

Figure 9 shows a modification of Figure 5 in that the lower face of the flange 25 is provided with a cylindrical knife cutter 41. If the assembly shown in Figure 4, modified according to Figure 9, is inserted into the threaded aperture in the main conduit wall 12 while the liner 15 is unperforated, the knife cutter 41 will cut an aperture 14 through the liner whose rim can then be stretched over the flange 25 of the conduit, snapping back into the re-entrant space between the flange 25 and the lining member 23.

In other respects, the operation of the Figure 9 modification proceeds as described with reference to Figures 4 to 6.

## Claims

1. A method of sealing the junction with a branch passage (22) of a conduit (12) provided with a resilient lining (15) comprising forming an aperture (14) in the lining (15) of the conduit (12) at the position of the branch passage (22), forming an aperture (21) in the conduit (12), larger than the aperture (14) in the lining (15), at the position of the branch passage (22), inserting a flanged conduit flange-first through said apertures (12, 14), the flange (25) being smaller than the aperture (21) in the conduit (12) but larger than the aperture (14) in the lining (15), the natural resilience of the lining (15) allowing the flange (25) to pass through the aperture (14) therein, lining the aperture (21) in the main conduit (12) to reduce its size below that of the flange (25) of the flanged conduit and drawing the branch conduit (22) outwards from the main conduit (12) through its lined aperture so as to engage the rim of the aperture (14) in the lining (15) to seal it against the lining of the aperture (21) in the main conduit (12).

2. A method as claimed in claim 1 wherein the flange (25) is of generally uniform width around its respective conduit.

3. A method as claimed in claim 1 or claim 2 wherein the flange (25) is integral with its respective conduit.

4. A method as claimed in any one of claims 1 to 3 wherein the aperture lining step comprises providing a lining member (23) on the flanged conduit when it is inserted through the apertures (14, 21).

5. A method as claimed in claim 2 or any claim dependent thereon wherein the lining member (23) is mounted on the flanged conduit by engaging threads.

6. A method as claimed in claim 5 wherein the lining member (23) has threads engageable with the aperture (21) in the conduit (12).

7. A method as claimed in any one of claims 1 to 6 wherein the step of forming an aperture (14) in the lining (15) of a conduit (12) is achieved by providing a knife cutter (41) on the end of the flanged conduit.

8. A method as claimed in any one of claims 1 to 7, including providing means (34, 35) to detect the position of the branch passage (22) from the interior of the lining (15, 33) of the lined conduit (22, 32).

9. A method as claimed in claim 8, wherein said detecting means (34, 35) includes a carriage adapted to travel down the lined conduit (12) formed with a branch passage (22).

10. A method as claimed in any one claims 1 to 9, wherein a compression seal is located between the flange (25) and the liner (15).

## Patentansprüche

1. Verfahren zur Abdichtung der Verbindung einer mit einer elastischen Auskleidung (15) versehenen Leitung (12) mit einer Abzweigung (22), bei dem man in der Auskleidung (15) der Leitung (12) an der Position der Abzweigung (22) eine Öffnung (14) ausbildet, in der Leitung (12) an der Position der der Abzweigung (22) eine Öffnung (21) ausbildet, die größer ist als die Öffnung (14) in der Auskleidung (15), eine mit Flansch versehene Leitung mit dem Flansch zuerst durch die Öffnungen (12, 14) einführt, wobei der Flansch (25) kleiner als die Öffnung (21) in der Leitung (12), aber größer als die Öffnung (14) in der Auskleidung (15) ist, wobei der Flansch aufgrund der Eigenelastizität der Auskleidung (15) durch die Öffnung (14) darin hindurchgeführt werden kann, die Öffnung (21) in der Hauptleitung (12) auskleidet, um ihre Größe kleiner zu machen als die des Flansches (25) der mit Flansch versehenen Leitung, und die Abzweigungsleitung (22) von der Hauptleitung (12) durch ihre ausgekleidete Öffnung nach außen zieht und so den Rand der Öffnung (14) in der Auskleidung (15) in Eingriff bringt, um ihn gegen die Auskleidung der Öffnung (21) in der Hauptleitung (12) abzudichten.

2. Verfahren nach Anspruch 1, bei dem der Flansch (25) um seine jeweilige Leitung herum eine allgemein gleichmäßige Breite aufweist.

3. Verfahren nach Anspruch 1 oder 2, bei dem der Flansch (25) mit seiner jeweiligen Leitung integral ausgebildet ist.

4. Verfahren nach einem der Ansprüche 1 bis 3, bei dem man bei der Auskleidung der Öffnung ein Auskleidungsglied (23) an der mit Flansch versehenen Leitung vorsieht, wenn sie durch die Öffnungen (14, 21) eingeführt wird.

5. Verfahren nach Anspruch 2 oder einem davon abhängigen Anspruch, bei dem das Auskleidungsglied (23) durch ineinandergreifende Gewinde an der mit Flansch versehenen Leitung angebracht wird.

6. Verfahren nach Anspruch 5, bei dem das Auskleidungsglied (23) ein mit der Öffnung (21) in der Leitung (12) in Eingriff bringbares Gewinde aufweist.

7. Verfahren nach einem der Ansprüche 1 bis 6, bei dem der Schritt der Ausbildung einer Öffnung (14) in der Auskleidung (15) einer Leitung (12) durch Bereitstellung einer Messerschneide (41) am Ende der mit Flansch versehenen Leitung erreicht wird.

8. Verfahren nach einem der Ansprüche 1 bis 7, bei dem man ein Mittel (34, 35) zur Erfassung der Position der Abzweigung (22) von dem Inneren der Auskleidung (15, 33) der ausgekleideten Leitung (22, 32) bereitstellt.

9. Verfahren nach Anspruch 8, bei dem das Erfassungsmittel (34, 35) einen Wagen umfaßt, der zum Fahrenentlang der mit einer Abzweigung (22) ausgebildeten ausgekleideten Leitung (12) ausgeführt ist.

10. Verfahren nach einem der Ansprüche 1 bis 9, bei dem eine Druckdichtung zwischen dem Flansch (25) und der Auskleidung (15) angeordnet ist.

## Revendications

1. Procédé pour réaliser un joint étanche au niveau de la jonction entre un passage de branchement (22) et un conduit (12) pourvu d'une doublure résiliente (15), impliquant de former une ouverture (14) dans la doublure (15) du conduit (12) à l'endroit du passage de branchement (22), de former une ouverture (21) dans le conduit (12), plus grande que l'ouverture (14) dans la doublure (15), à l'endroit du passage de branchement (22), d'insérer un conduit bridé, bride en premier, à travers lesdites ouvertures (12, 14), la bride (25) étant plus petite que l'ouverture (21) dans le conduit (12) mais plus grande que l'ouverture (14) dans la doublure (15), la résilience naturelle de la doublure (15) permettant à la bride (25) de traverser et d'entrer dans l'ouverture (14), de doubler l'ouverture (21) dans le conduit principal (12) afin de diminuer sa taille pour qu'elle soit inférieure à celle de la bride (25) du conduit bridé, et de tirer le conduit de branchement (22) vers l'extérieur depuis le conduit principal (12) à travers son ouverture doublée, de manière à venir en prise avec le bord de l'ouverture (14) dans la doublure (15) pour former avec elle un joint étanche contre la doublure de l'ouverture (21) dans le conduit principal (12).

2. Procédé selon la revendication 1, dans lequel la bride (25) est de largeur généralement uniforme autour de son conduit respectif.

3. Procédé selon la revendication 1 ou la revendication 2, dans lequel la bride (25) est formée intégralement avec son conduit respectif.

4. Procédé selon l'une quelconque des revendications 1 à 3, dans lequel l'étape consistant à doubler l'ouverture comprend la fourniture d'un organe de doublure (23) sur le conduit bridé lorsqu'il est inséré à travers les ouvertures (14, 21).

5. Procédé selon la revendication 2 ou toute revendication dépendant de celle-ci, dans lequel l'organe de doublure (23) est monté sur le conduit bridé par l'engagement de filetages.

6. Procédé selon la revendication 5, dans lequel l'organe de doublure (23) possède des filetages pouvant s'engager avec l'ouverture (21) dans le conduit (12).

7. Procédé selon l'une quelconque des revendications 1 à 6, dans lequel l'étape consistant à former une ouverture (14) dans la doublure (15) d'un conduit (12) est réalisée en prévoyant un dispositif de coupe à couteaux (41) sur l'extrémité du conduit bridé.

8. Procédé selon l'une quelconque des revendications 1 à 7, comportant la fourniture d'un moyen (34, 35) pour détecter la position du passage de branchement (22) depuis l'intérieur de la doublure (15, 33) du conduit doublé (22, 32).

9. Procédé selon la revendication 8, dans lequel ledit moyen de détection (34, 35) comporte un chariot adapté pour se déplacer dans le conduit doublé (12) formé avec un passage de branchement (22).

10. Procédé selon l'une quelconque des revendications 1 à 9, dans lequel un joint de compression est situé entre la bride (25) et la doublure (15).
